# EUROPEAN PATENT APPLICATION

(11) **EP 0 678 413 A1**
(43) Date of publication of application: **25.10.1995**
(21) Application number: 94850088.9
(22) Date of filing: 18.05.1994
(51) Int. Cl.: B60K 25/02

(54) **Arrangement for regulation of power in a tractor or in a mobile work machine**

(30) Priority: 22.04.1994 FI 941873
(71) Applicant: VALMET TRAKTORI OY, SF-40100 Jyväskylä (FI)
(72) Inventor: Niskanen, Hannu, SF-40420 Jyskä (FI); Huuskonen, Pekka, SF-40420 Jyskä (FI)
(74) Representative: Rostovanyi, Peter

(57) **Abstract**

The invention concerns an arrangement for regulation of power in a tractor or in a mobile work machine, which tractor or work machine is provided with an engine (1), with a running power transmission (2) driven by the engine (1) by the intermediate of a clutch, with hydraulic pumps (7) of the hydraulic system operated by a drive shaft (6) permanently connected with the crankshaft (4) of the engine, and with a power take-off mechanism (3) connected with said drive shaft (6) by the intermediate of a disconnecting clutch (8). The engine (1) has been constructed so that it can be switched to operate optionally in at least two different power ranges, i.e. a higher power range and a lower power range. The running power transmission mechanism (2) has been dimensioned in accordance with the maximum output of the lower power range of the engine (1), and the power take-off mechanism (3) has been dimensioned in accordance with the maximum output of the higher power range of the engine (1). The system is provided with a control that prevents the use of the higher power range of the engine (1) unless the power take-off mechanism (3) and/or the other auxiliary equipment takes/take, from the engine (1), at least a torque (ΔM) equal to the difference between the torque corresponding to the higher power range of the engine (1) and the torque corresponding to the lower power range of the engine (1).

## Description

The invention concerns an arrangement for regulation of power in a tractor or in a mobile work machine, which tractor or work machine is provided with an engine, with a running power transmission driven by the engine by the intermediate of a clutch, with hydraulic pumps of the hydraulic system operated by a drive shaft permanently connected with the crankshaft of the engine, and with a power take-off mechanism connected with said drive shaft by the intermediate of a disconnecting clutch.

In farm tractors, the engine power is usually distributed between the mechanical running power transmission, the hydraulic system, and the mechanical power take-off mechanism. In view of the technology of strength, the tractors are dimensioned so that both the running power transmission and the power take-off are capable of transferring the full output of the engine alone. Owing to this, in cases in which both systems are operated at the same time, the capacities of the running power transmission and of the power take-off are excessively dimensioned. If the tractor is used mainly for power take-off operation, such a dimensioning of the tractor results in fully unnecessary expenses, and the mass of the tractor is also unnecessarily high in consideration of the power take-off operation alone. This is why, in view of special duties, it would be advisable to optimize the construction of the tractor.

The object of the present invention is to provide an arrangement by whose means it is possible to utilize the entire dimensioned capacity of the running power transmission and the power take-off of a tractor or an equivalent mobile work machine efficiently and completely. In view of achieving this, the invention is mainly characterized in that the engine has been constructed so that it can be switched to operate optionally in at least two different power ranges, i.e. a higher power range and a lower power range, that the running power transmission mechanism has been dimensioned in accordance with the maximum output of the lower power range of the engine, that the power take-off mechanism has been dimensioned in accordance with the maximum output of the higher power range of the engine, and that the system is provided with a control that prevents the use of the higher power range of the engine unless the power take-off mechanism and/or the other auxiliary equipment takes/take, from the engine, at least a torque equal to the difference between the torque corresponding to the higher power range of the engine and the torque corresponding to the lower power range of the engine.

By means of the invention, a number of advantages are achieved over the prior art, and of these advantages, in this connection, for example, the following should be mentioned. It is a general principle of the arrangement in accordance with the invention that, in the tractor, a variable-power engine is used, in particular an engine provided with two power ranges, and the power transfer capacity of the power take-off mechanism is dimensioned in accordance with the higher power range, whereas the running power transmission can be dimensioned for the lower power range. Thus, the power transfer capacity of the power take-off mechanism has been dimensioned considerably higher than the power transfer capacity of the running power transmission. This is why, in work duties in which primarily a high power take-off capacity alone is needed, it is possible to use a tractor whose weight is considerably lower than the weight of conventional tractors and which is provided with a running power transmission of a substantially lower cost. The system is provided with particular detectors by whose means the output of the power take-off mechanism can be ascertained, and with an equipment which switches the engine power appropriately to the correct power range. The further advantages and characteristic features of the invention will come out from the following detailed description of the invention.

In the following, the invention will be described by way of example with reference to the figures in the accompanying drawing.

Figure 1 is a schematic illustration of two torque curves of the tractor engine as a function of the speed of rotation.

Figure 2 is a schematic illustration of the system that comprises the tractor engine, the running power transmission, and the power take-off as well as of the arrangement for regulation and measurement of the power.

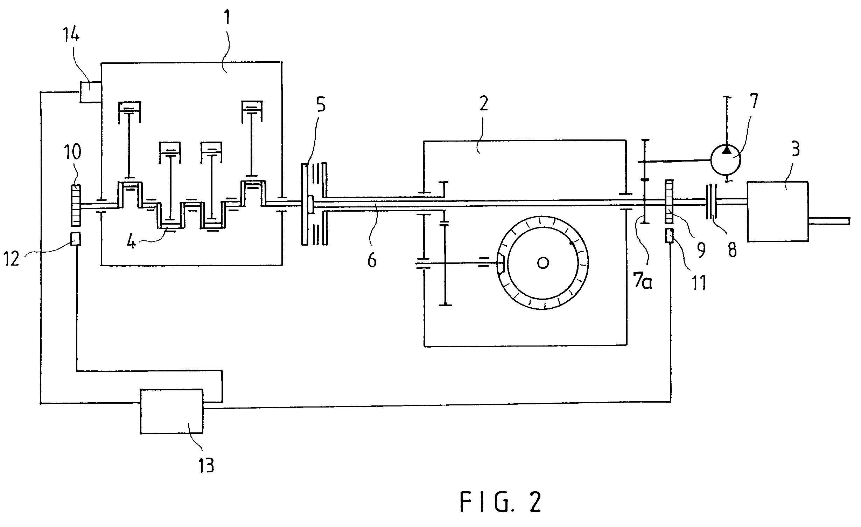

Thus, the tractor or an equivalent mobile work machine includes a motor 1, whose power is adjustable so that it has preferably at least two different power ranges. This can be arranged simply, for example, in turbo-charged engines, in which the charger gives the engine an excess amount of air in order that it should be possible to feed a corresponding larger amount of fuel to the engine so as to produce a higher output. The injection pump of such an engine could simply be connected with an injection regulator or with a corresponding limiter, which can be regulated in at least two limit positions so as to produce two different power ranges. From the lower power range of the engine 1, the maximum permitted output of the running power transmission can be obtained. In a corresponding way, from the higher power range, the maximum permitted output of the power take-off mechanism can be obtained. In Fig. 2, the running power transmission of the tractor is denoted fully schematically with the reference numeral 2, and the power take-off mechanism with the reference numeral 3. Moreover, the engine 1 is provided with a regulator or with corresponding regulation means 14 as described above, by whose means the power range can be changed easily, e.g., between these two alternative power ranges. The change of power range can be carried out simply, e.g., by controlling electrically.

The tractor is provided with a shaft 6 which passes through the running transmission mechanism 2 and which is connected directly with the flywheel 5 of the engine 1 so that said shaft 6 revolves all the time when the engine 1 is running. By means of said shaft 6, the power and the torque are transferred to the hydraulic pumps 7 of the tractor and through a multiple-disc clutch 8 to the power take-off mechanism 3. Thus, said shaft 6 operates as the drive shaft of the hydraulic system and of the power take-off mechanism 3. In Fig. 2, the reference numeral 7a refers to the drive wheel of the hydraulic pumps 7, from which the power is taken through a gear transmission to the hydraulic pumps 7. The reference numeral 9 refers to a meter wheel mounted on the shaft 6, from which wheel the speed of rotation of the shaft 6 is obtained as pulses. To the front end of the crankshaft 4 of the engine 1, a second meter wheel 10 is fixed, whose tooth number is equal to that of the meter wheel 9 placed on the drive shaft 6 of the power take-off. Thus, said meter wheels 9 and 10 are interconnected by a torsionally rigid crankshaft 4 and by a relatively thin drive shaft 6 of the power take-off mechanism 3, so that the connection between the meter wheels 9 and 10 is fixed. Moreover, in connection with the meter wheels 9 and 10, pulse detectors 11,12 are mounted, which measure the speeds of rotation of the meter wheels 9 and 10 as pulses. The detectors 11,12 are connected to an electronic control unit 13, which controls the regulation device 14 in a predetermined way so as to select the desired power range of the engine 1.

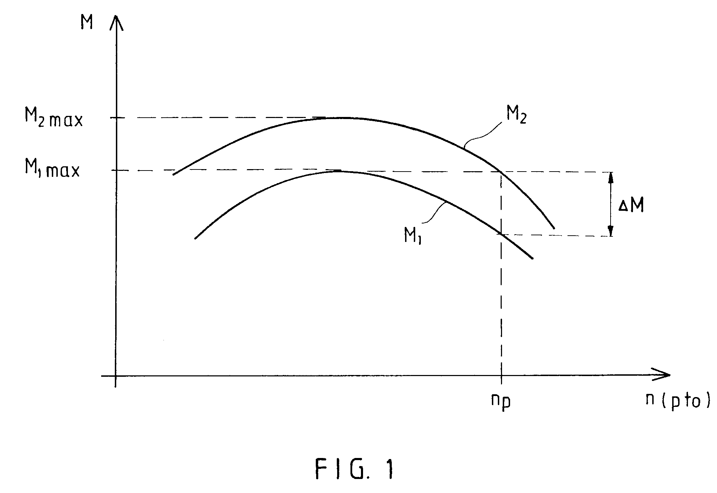

When the engine 1 runs without load, a pulse-formed signal arrives from each detector 11,12 at the electronic control unit 13. The pulses have a distinct form, from which the points of start and end of the pulses can be readily noticed. The electronic system of the arrangement (electronic control unit 13) measures the phase difference between the pulses that arrive from the detectors 11,12, which difference is seen simply as the time difference between the starting points of the pulses, said difference being measured in relation to the speed of rotation. When the power take-off mechanism 3 has not been switched on by means of the multi-disc clutch 8, the electronic system of the arrangement considers the situation as unloaded and stores the phase difference between the pulses arriving from the detectors 11,12 in its memory. When the tractor operator switches the multi-disc clutch 8 of the power take-off mechanism 3 on, the shaft 6 transfers the torque and the power from the engine 1 to the power take-off mechanism 3 while the shaft 6 is subjected to torsion in accordance with the torque taken by the power take-off mechanism 3. The torsion of the shaft 6 is directly proportional to the torque and power present in the shaft 6. Now, the control unit 13 starts measuring the phase difference between the pulses arriving from the detectors 11,12 and, when the phase difference related to the speed of rotation reaches a predetermined level, the control unit 13 gives the regulation device 14 the control to switch on the higher power range of the engine 1. The higher power range of the engine 1 remains switched on until the phase difference between the pulses arriving from the detectors 11,12 has been lowered sufficiently far below the preset limit. The higher power range is kept switched on as long as the torque (ΔM) transferred by the shaft 6 has a magnitude equal to the difference between the torque curves M₂ and M₁ shown in Fig. 1. Then, by the intermediate of the regulation device 14, the electronic control unit 13 controls the higher power range of the engine 1 (corresponds to the torque curve M₂ in Fig. 1) to be switched off, and the lower power range (corresponds to the torque curve M₁ in Fig. 1) to be switched on. The difference between the switching-on and switching-off limits is so large that no switching oscillation occurs. By means of the procedures described above, always when the tractor is started, the phase difference of the unloaded power take-off 3 is determined again, whereby possible permanent deformations, if any, of the shaft 6 do not affect the control process of the system.

Thus, in the arrangement in accordance with the invention, the power passing through the power take-off mechanism 3 is measured in real time. By means of constant measurement of the power take-off (torque), the advantage is obtained that the selection of the power range of the engine 1 can be carried out directly on the basis of the measurement. The higher power range of the engine 1 can be switched on when the power passing through the power take-off mechanism 3 is higher than the difference between the different power ranges (lower and higher power range) of the engine. By means of such an arrangement, the running power transmission 2 cannot be overloaded at all. When the power take-off output is lowered to a level below the difference between the power ranges of the engine 1, the lower power range is again switched on in the way described above. Further, as was already described above, the system includes a delay function which takes care that the selection of power range does not oscillate between the different power ranges.

The adjustment of the electronic system of the arrangement to a certain difference between the switching stages is carried out by means of a separate calibration device. By means of the calibration device, the phase difference between the detector signals is simulated, and the calibration device includes a number of different preset phase differences. When a switching point in accordance with a certain phase difference is desired, the calibration device is connected to the control unit 13, and from the calibration unit, such a phase difference is transferred into the memory of the control unit 13 as is used from now on as a reference value when the power range of the engine is being changed. The phase difference can be verified by means of a separate power take-off brake, in which case the point of changing the power range can be established precisely. As a safety measure, the control unit 13 and the regulation device 14 may be, for example, sealed in such a way that, without breaking the seal, the engine 1 cannot be switched on to operate constantly in the higher power range, which might damage the running power transmission mechanism 2.

Still, with reference to Fig. 1, it can be stated briefly that, in said figure, two torque curves M₁,M₂ are shown as a function of the speed of rotation, which is supposed to illustrate the difference that is present between the higher and the lower power range and the torques of the engine. The difference between the torque curves M₂ and M₁ is denoted with the reference ΔM. Thus, in the case concerned, the engine has two alternatively usable power ranges.

Above, the invention has been described exclusively by way of example with reference to the figures in the accompanying drawing. The invention is, however, not confined to the exemplifying embodiment illustrated in the figures alone, but different embodiments of the invention may show variation within the scope of the inventive idea defined in the accompanying patent claims.

## Claims

1. Arrangement for regulation of power in a tractor or in a mobile work machine, which tractor or work machine is provided with an engine (1), with a running power transmission (2) driven by the engine (1) by the intermediate of a clutch, with hydraulic pumps (7) of the hydraulic system operated by a drive shaft (6) permanently connected with the crankshaft (4) of the engine, and with a power take-off mechanism (3) connected with said drive shaft (6) by the intermediate of a disconnecting clutch (8), **characterized** in that the engine (1) has been constructed so that it can be switched to operate optionally in at least two different power ranges, i.e. a higher power range and a lower power range, that the running power transmission mechanism (2) has been dimensioned in accordance with the maximum output of the lower power range of the engine (1), that the power take-off mechanism (3) has been dimensioned in accordance with the maximum output of the higher power range of the engine (1), and that the system is provided with a control that prevents the use of the higher power range of the engine (1) unless the power take-off mechanism (3) and/or the other auxiliary equipment takes/take, from the engine (1), at least a torque (ΔM) equal to the difference between the torque (M₂) corresponding to the higher power range of the engine (1) and the torque (M₁) corresponding to the lower power range of the engine (1).

2. Arrangement as claimed in claim 1, **characterized** in that the arrangement is fitted to measure the power passing through the power take-off mechanism (3) in real time and, on the basis of the measurement signals, to select a suitable power range of the engine (1) so as to operate the running power transmission (2) and the power take-off mechanism (3).

3. Arrangement as claimed in claim 1 or 2, **characterized** in that the control system is connected to keep the lower power range of the engine (1) in operation and not to permit switching on of the higher power range until the power passing through the power take-off mechanism is higher than the difference between the higher and the lower power range of the engine.

4. Arrangement as claimed in any of the preceding claims, **characterized** in that the measurement of the power passing through the power take-off mechanism (3) has been carried out by measuring the torsion of the shaft (6) passing from the engine (1) to the power take-off mechanism (3).

5. Arrangement as claimed in any of the preceding claims, **characterized** in that, for the purpose of measurement of the torsion of the shaft (6) passing from the engine (1) to the power take-off mechanism (3), a meter wheel (9) is mounted on said shaft (6) and, similarly, a meter wheel (10), whose tooth number is equal to that of the meter wheel (9) mounted on the shaft (6), is mounted on the crankshaft (4) of the engine (1), detectors (11,12) being mounted on each of the meter wheels (9,10) to measure the speeds of rotation of the meter wheels (9,10) as pulses.

6. Arrangement as claimed in claim 5, **characterized** in that the detectors (11,121) are arranged to feed pulse-formed measurement signals to an electronic control unit (13), which is fitted to compute the phase difference between the pulses and, based on this difference, to give the engine (1) the necessary control command to select the correct power range.

7. Arrangement as claimed in any of the preceding claims, **characterized** in that the electronic control unit (13) is arranged to measure the phase difference between the pulses arriving from the detectors (11,12) as a time difference related to the speed of rotation.

8. Arrangement as claimed in any of the preceding claims, **characterized** in that the electronic control unit (13) is arranged to switch on the higher power range of the engine (1) when the phase difference of the pulse-formed signals arriving from the detectors (11,12), related to the speed of rotation, has reached a predetermined level.

9. Arrangement as claimed in any of the preceding claims, **characterized** in that the electronic control unit (13) is arranged to switch off the higher power range of the engine (1) when the phase difference of the pulse-formed signals arriving from the detectors (11,12), related to the speed of rotation, has gone down below a predetermined limit.

10. Arrangement as claimed in any of the preceding claims, **characterized** in that the electronic control unit (13) is provided with a delay function so as to prevent oscillation of the selection of power ranges.
